# EUROPEAN PATENT APPLICATION

(11) **EP 4 517 628 A1**
(43) Date of publication of application: **05.03.2025**
(21) Application number: 23194062.8
(22) Date of filing: 29.08.2023
(51) Int. Cl.: G06Q 20/02

(54) **BATCH SETTLEMENT OF PAYMENTS**

(71) Applicant: IPCO 2012 Limited, London EC4R 3AB (GB)
(72) Inventor: HUTCHINGS, Richard Charles, Amersham, HP7 0AZ (GB); STRASSER, Heike Brigitte, London, N13 4BA (GB)
(74) Representative: Keltie LLP

(57) **Abstract**

A method of providing batch payment clearing is described, as is a clearing system implemented by a suitably programmed computer system or network to implement it. A plurality of payments are received for clearing and settlement between account holders of participating financial institutions for clearing and settlement, wherein the plurality of payments are received during a settlement cycle. At the end of the settlement cycle, a net change in position is calculated for each participating financial institution. A pseudo settlement agent associated with a real time payment clearing service is then used to determine whether the net changes in position for each participating financial institution meet the rules of the real-time payment clearing service. If the net changes in position for each participating financial institution meet the rules of the real-time payment clearing service, the plurality of payments are forwarded to participating financial institutions as cleared and the net fund movements are forwarded for adjusting liquidity positions of the participating financial institutions held within the pseudo settlement agent or associated real-time payment clearing service to reflect the net funds movements.

## Description

### TECHNICAL FIELD

The present disclosure relates to batch settlement of payments.

### BACKGROUND

Payments may be established between parties in a number of ways - credit and debit card payment transactions, account to account payments - but to complete the payment process, the payment needs to be cleared between the participating banks (or other participants) representing both parties (for example, the issuing bank for a consumer account and the acquirer bank for a merchant account) and settled so that funds pass to the correct places to complete the transaction. Clearing comprises the processes necessary to allow settlement to occur, and settlement involves the actual exchange of funds so that these reflect the completion of the transaction.

With the adoption of credit and debit cards, e-commerce and internet banking, transactions resulting in payments have been made between parties at real time and outside of conventional office hours, while clearing and settlement had originally been performed significantly more slowly. The development of automated clearing house systems - starting with the Automatic Clearinghouse System in California and BACS in the UK in the 1960s - has allowed clearing and settlement processes to take place more rapidly, eventually reaching real-time. Automated clearing houses are computer-implemented systems adapted to process large volumes of transactions in batches, typically operating on a net settlement basis to reduce the number of deposits that banks need to make. More recent systems, such as the Faster Payments Service in the UK, can reduce the time to complete payments from three working days to a few seconds.

There are now two main types of approach to clearing of payments: batch payment clearing and real time payment clearing. Batch payment follows a traditional model - participants (typically banks) submit payment instructions on behalf of their customers and these payment instructions are accumulated by the clearing system over the course of a settlement cycle (there are typically one or more settlement cycles during a working day). At the end of a settlement cycle, payments between participants are netted, and settlement is achieved at the relevant central bank by moving funds between the participating banks - in practice, by adjusting the liquidity positions of the different banks, as each bank will have kept funds with the central bank to provide liquidity for transactions. This requires central bank involvement and will typically only take place when the central bank is open. By contrast, real time payment clearing settle transactions as they arrive and clears them if the payor has sufficient liquidity within the clearing system and the transaction obeys predetermined rules. While this approach allows for immediate clearing and settlement, it is not suited for bulk transactions.

Batch payment clearing is significantly more efficient in a number of contexts, such as payments of salary and benefits, and typically has a lower cost overhead. It is also easy to manage settlement risk (the risk that a participant may not have the funds to meet their obligations) as only after the settlement process at the end of the settlement period is confirmed as successful are the underlying payment instructions forwarded - this is known as "settlement before output", and this essentially obviates all settlement risk. It would therefore be desirable to maintain the positive features of batch payment clearing in more flexible clearing and settlement solutions.

The present disclosure has been devised to mitigate or overcome at least some of the above-mentioned problems with existing approaches to provide an improved approach to clearing and settlement.

### SUMMARY OF THE DISCLOSURE

According to a first aspect of the present disclosure there is provided a method of providing batch payment clearing, the method comprising at a clearing system implemented by a suitably programmed computer system or network: receiving a plurality of payments for clearing and settlement between account holders of participating financial institutions for clearing and settlement, wherein the plurality of payments are received during a settlement cycle; at the end of the settlement cycle, calculating a net change in position for each participating financial institution; using a pseudo settlement agent associated with a real time payment clearing service to determine whether the net changes in position for each participating financial institution meet the rules of the real-time payment clearing service; and if the net changes in position for each participating financial institution meet the rules of the real-time payment clearing service, forwarding the plurality of payments to participating financial institutions as cleared and forwarding the net fund movements for adjusting liquidity positions of the participating financial institutions held within the pseudo settlement agent or associated real-time payment clearing service to reflect the net funds movements.

Using this approach, key desirable qualities of batch payment clearing can be preserved - efficient aggregation of related transactions, simpler interaction for participating financial institutions with the clearing system, appropriateness for dealing with bulk payments (such as payroll, benefits, standing orders), reduced liquidity requirements for participating financial institutions from the averaging effect of aggregating transactions "in" and "out" from a financial institution over a settlement cycle - while using a real time payment clearing system to enable continuous clearing operation even when the relevant central bank is closed and unable to perform settlement.

In embodiments, determining the net change in position for each participating financial institution may comprise calculating net fund movements between the participating financial institutions to provide a net settlement position between the financial institutions, and for each participating financial institution summing the balances in the net settlement positions involving that financial institution.

In embodiments, the rules of the real-time payment service may comprise liquidity rules for participating financial institutions.

In embodiments, the pseudo settlement agent may be implemented by one or more elements of a real-time payment clearing service.

In some embodiments, if settlement using the pseudo settlement agent fails, a further attempt at settlement may be made after removing one or more payments. In such a case, if settlement fails, all payments involving participating financial institutions that failed a liquidity rule may be removed from the plurality of payments, and the further attempt at settlement may be made thereafter.

In embodiments, the method may further comprise determining whether the central bank will be open when the transactions of a settlement cycle will be ready for settlement, and forwarding the transactions directly to the central bank for settlement if the central bank is open and using the pseudo settlement agent if the central bank is not open.

According to a second aspect of the disclosure, there is provided a computer-implemented batch payment clearing system, the batch payment clearing system comprising a computer system or network having one or more processors programmed to: receive a plurality of payments for clearing and settlement between account holders of participating financial institutions for clearing and settlement during a settlement cycle; at the end of the settlement cycle, calculate a net change in position for each participating financial institution; use a pseudo settlement agent associated with a real time payment clearing service to determine whether the net changes in position for each participating financial institution meet the rules of the real-time payment clearing service; and if the net changes in position for each participating financial institution meet the rules of the real-time payment clearing service, forward the plurality of payments to participating financial institutions as cleared and make adjustments in respect of the plurality of payments to liquidity positions of the participating financial institutions held within the pseudo settlement agent or its associated real-time payments system.

In embodiments, in determining the net change in position for each participating financial institution the batch payment clearing system may calculate net fund movements between the participating financial institutions to provide a net settlement position between the financial institutions, and for each participating financial institution may sum the balances in the net settlement positions involving that financial institution.

In embodiments, the pseudo settlement agent may be implemented by one or more elements of a real-time payment clearing service.

In embodiments, if settlement using the pseudo settlement agent fails, the batch payment clearing system may be adapted to make a further attempt at settlement is made after removing one or more payments. For example, it may be adapted to remove all payments involving participating financial institutions that failed a liquidity rule from the plurality of payments, and to make the further attempt at settlement thereafter.

In embodiments, the batch payment clearing system may be adapted to determine whether the central bank will be open when the transactions of a settlement cycle will be ready for settlement, and to forward the transactions directly to the central bank for settlement if the central bank is open and to use the pseudo settlement agent if the central bank is not open.

### BRIEF DESCRIPTION OF THE DRAWINGS

One or more embodiments of the disclosure will now be described, by way of example only, with reference to the accompanying drawings, in which:
Figure 1 illustrates the steps common to a banking transaction;
Figure 2 shows a payment ecosystem including a clearing system along with other parties acting and interacting in the payment ecosystem;
Figures 3A and 3B indicate two main approaches to settlement and clearing - Figure 3A illustrates a deferred multilateral net settlement system, and Figure 3B illustrates a real time gross settlement system;
Figure 4 illustrates schematically a broad embodiment of the disclosure;
Figure 5 illustrates a system adapted to implement an embodiment of the disclosure; and
Figure 6 describes a method according to an embodiment of the disclosure in greater detail.

### DETAILED DESCRIPTION

General and specific embodiments of the disclosure will be described below with reference to the Figures.

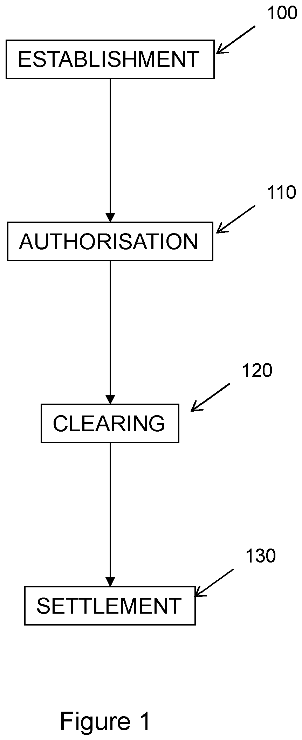

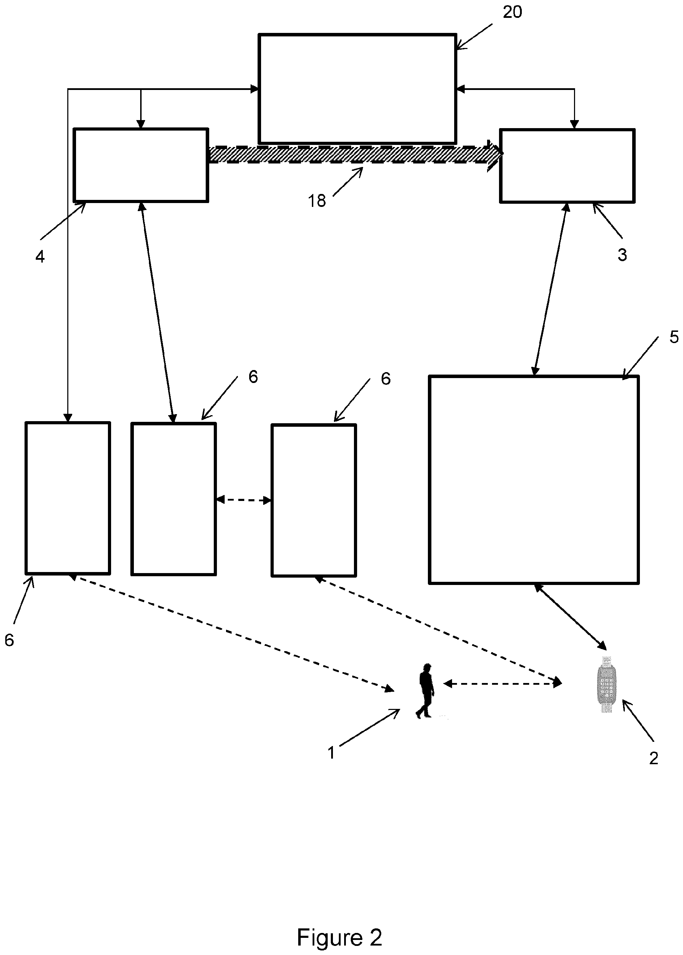

Figure 1 shows steps in a process leading to a payment, and Figure 2 shows a financial ecosystem including a clearing system along with other participants in the financial system.

There are a variety of ways in which payments may be originated and performed, but Figure 1 illustrates their general common characteristics. Basis for a payment needs to be somehow established 100 - in the case of bulk payments, this will typically be by establishing that a sum is to be paid by one party to an another on an agreed basis (employee salary or expenses, payment of state benefits and so on), whereas in the case of card transactions it may be made by agreement at a point-of-sale terminal. There will typically be authorisation of some kind for the transaction - in the commonest bulk payment case, this may merely be by the recipient providing bank details and their agreement that payments can be made into the identified account, whereas for a card transaction there may be an authorisation process mediated by a transaction scheme to determine whether or not a transaction can be authorised, leading to payment.

At this point, it has been agreed that payment should go ahead. The mechanics of making the payment involve the final two steps, by which funds need to pass from the payor's financial institution to the payee's financial institution in accordance with what has been agreed - settlement 130 is the process of moving the funds to the correct place, and clearing 120, which precedes settlement, involves any steps necessary to move from authorisation of the payment to actual flow of funds

Figure 2 illustrates a financial ecosystem appropriate to payments generally, and bulk payments in particular. Many such bulk payments involve institutions 6, some of whom as payors will be represented by a payor bank 4, and some of whom may be institutions capable of entering the clearing process directly. Such institutions may be making mandated payments to, or on behalf of, consumers 1, or may be making payments in respect of business-to-business transactions or agreements. Payments will in due course need to be made to a payee bank 3 holding the relevant payee account.

Consumers 1 (or institutions 6) may also make transactions with merchants 2 using payment cards - these will be authorised through a transaction system 5 so that a payment will subsequently made to settle an authorised transaction from the issuer bank (payor bank 4) of the payor to the acquirer bank (payee bank 3) of the merchant. Both payor banks 4 and payee banks 3 provide details of payments to be made into a clearing system 20 - different types of clearing system 20 will be described further below. Clearing will typically involve a central bank, and may be carried out by structures such as automatic clearing houses. The end result is a consequent flow 18 of funds from the payor bank 4 to the payee bank 3 on settlement to reflect the payment.

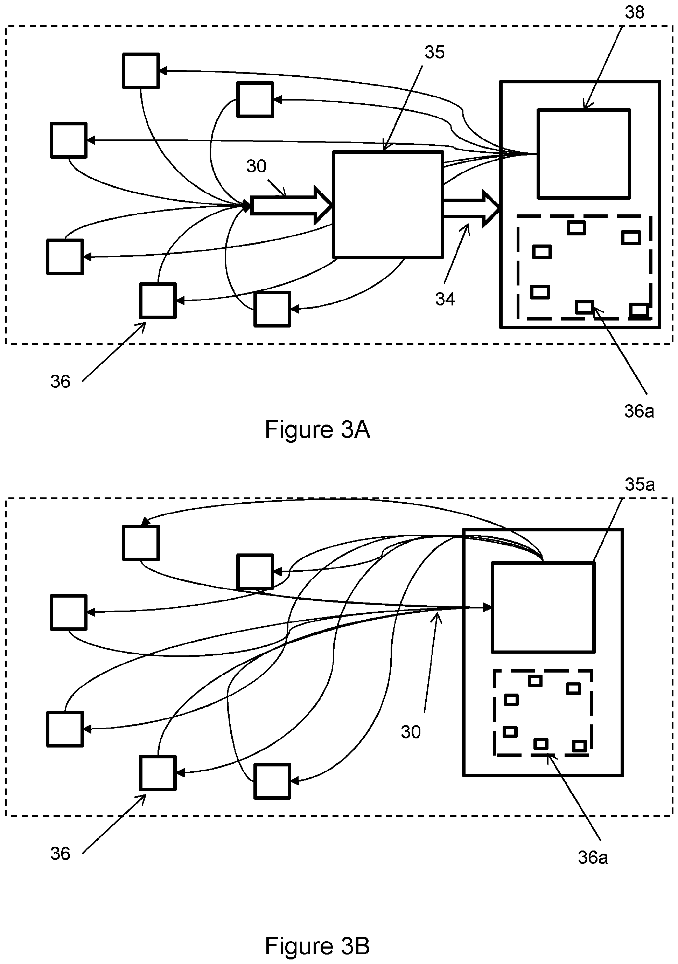

Figures 3A and 3B indicate the two main approaches to settlement and clearing - these can be considered alternative types of clearing system 20 in the context of Figure 2. In both models payments are typically now accepted in real time, but settlement may take place now or later. The conventional model is deferred, and involves netting of payments over a settlement cycle - this is generally known as "deferred multilateral net" settlement, and an example is shown in Figure 3A. The more modern real-time settlement model is known as "real time gross" settlement, and involves settlement of payments one by one as they arrive - an example is shown in Figure 3B. In both models, settlement risk must be managed - so that all cleared payments settle even if a bank fails - but the way in which this is achieved, and the overall process design, can vary.

Figure 3A illustrates the elements of a deferred multilateral net settlement system. Transactions flow 30 for clearing - potentially from a variety of sources, but in each case relating to a transfer of funds from one participant (a bank or other financial institution) to another bank from the banks 36 using the system - into a payment clearing system 35 where the payments are aggregated over a settlement cycle to provide a net flow of funds to and from each bank in the process. At the end of the settlement cycle, this net position is provided 34 to a central bank 38 for settlement. Each participating bank 36 will have some pool of funds 36a associated with it held at the central bank 38. The central bank will determine whether settlement between the parties can be carried out such that the banks can maintain sufficient liquidity - if not, various fallback positions may result to achieve the best available settlement according to the settlement model used (for example, settlement may be attempted for all transactions that do not involve any bank which fails to meet liquidity requirements in that settlement cycle). On settlement, funds are transferred so that the banks' positions at the central bank reflect the value of the processed transactions. Under this model, settlement takes place in batches at the central bank - this typically only takes place when the central bank is open for business (on a working day, in business hours), so settlement may not take place until days after submission for clearing. The aggregating effect of transactions over a settlement cycle - banks will typically have a set of outgoing and a set of incoming transactions - will typically reduce the size of the liquidity pool required for each bank.

Figure 3B illustrates the elements of a real time gross settlement system. This will typically be operated by an automated clearing house 35a (though in some countries, such systems are operated by central banks). In this case, payments are settled one by one in real time as part of the clearing process. Again, funds are deposited by banks 36 to provide liquidity, here so these can be tracked at the automated clearing house 35a to ensure commitments can be met without an insolvency event. Each incoming transaction in the stream of incoming transactions 30 is assessed at the automated clearing house 35a for clearing (in the light of the liquidity position of the affected banks and any other rules relating to the applicable clearing process), and if requirements are met and the transaction clears, it is immediately settled using the funds associated with the automated clearing house 35a, and these funds 36a are adjusted directly to reflect the transaction.

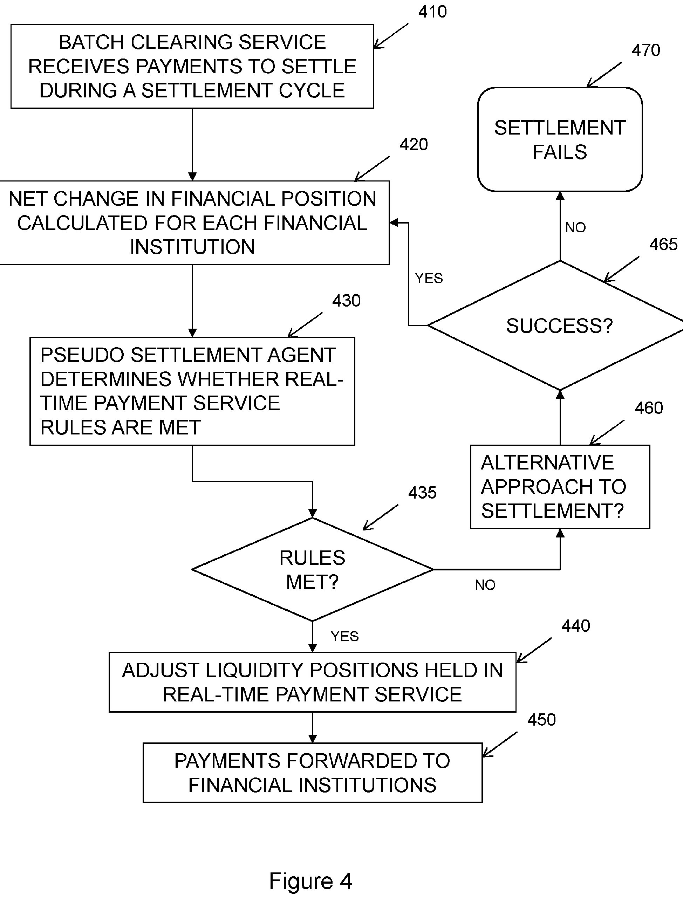

Figure 4 illustrates schematically a broad embodiment of the disclosure. In this embodiment, elements of both conventional batch payment and real time payment clearing are used to provide a more versatile approach to batch payment clearing.

The clearing system receives 410 a plurality of payments between account holders of participating institutions during a settlement cycle, in exactly the same manner as conventional batch payment clearing. At the end of the settlement cycle, a net change in financial position is calculated 420 for each participating financial institution - its overall net credit or debt position.

At this point, the process switches to using real time gross settlement principles. A pseudo settlement agent associated with a real time payment clearing service is used to determine 430 whether the net changes in position for each participating financial institution meet the rules of the real-time payment clearing service. This pseudo settlement agent may actually use relevant modules of a real time payment clearing service, or could act as a virtual extension to or simulation of such a service. If these rules are met 435, the batch transactions for the settlement period are treated as settled - the liquidity positions held within the pseudo settlement agent or real time clearing system are adjusted 440 to reflect the net funds movements and the payments are forwarded 450 to the participating financial institutions as cleared. The pseudo settlement agent or real time clearing system may then interact with a central bank when it is next practical to do so during central banking hours. If the rules are not met, then an alternative approach to settlement 460 may be attempted, in which case the process may be re-tried if this succeeds 465 but otherwise settlement will fail 470.

This approach provides effective control of settlement risk while allowing batch settlement to take place even when a central bank is not immediately available.

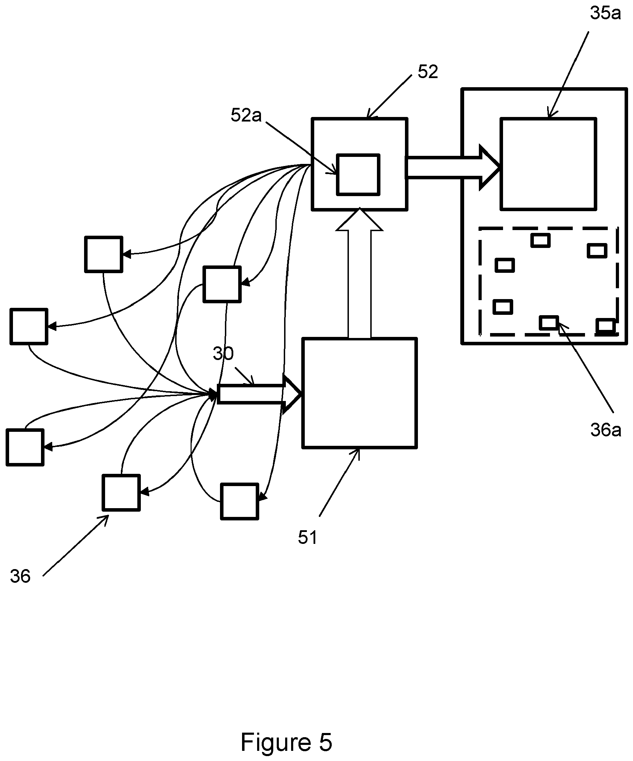

Figure 5 illustrates a system adapted to implement an embodiment of the disclosure. This involves a batch clearing system 51 and a pseudo settlement agent 52, interacting with the participating financial institutions 36 and a real time clearing system 35a (the real time clearing system 35a may interact with a central bank, but this is not shown). The pseudo settlement agent 52 may be implemented by a module of a real time clearing system, by a virtual extension to a real time clearing system, or another system altogether implementing the relevant real time clearing system functionality. The batch clearing system collects transactions 30 over a settlement period and nets them, the pseudo settlement agent 52 determines whether liquidity rules 52a permit settlement, and if so the liquidity positions 36a of the participating financial institutions are adjusted to reflect the settlement and the participating financial institutions 36 are notified. Adjustments to account positions held at the central bank will be made in due course as for conventional real-time gross settlement..

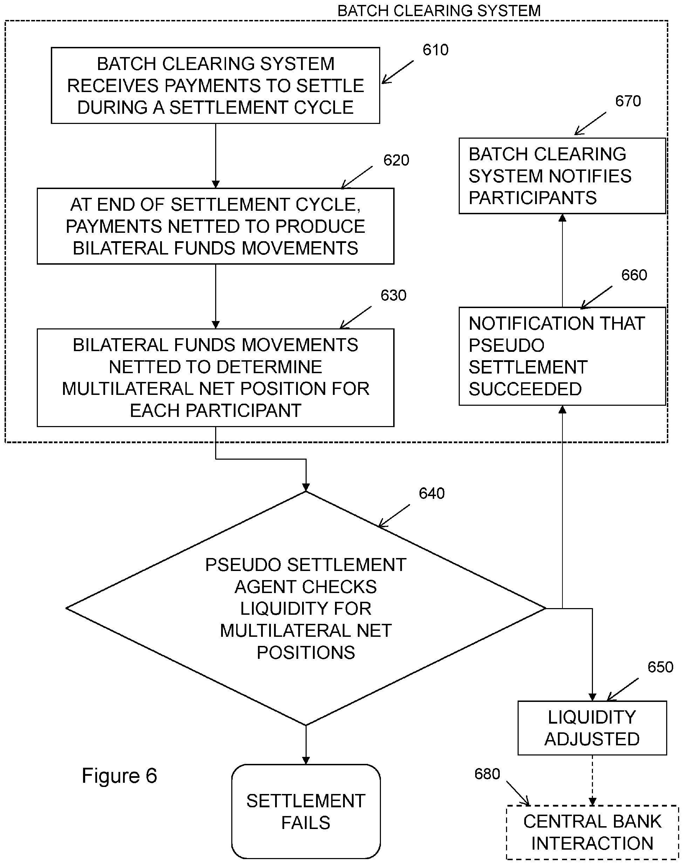

Figure 6 describes a method according to an embodiment of the disclosure in greater detail. In this approach, the liquidity management system of a real-time clearing system is modified or utilised to create the pseudo settlement agent used by the batch clearing system.

The batch clearing system operates settlement cycles 610 as normal. Payment instructions from participants are accumulated over the course of a cycle up to a cut-off point. The accumulated payment instructions are netted together 620, resulting in a set of "bilateral" funds movements to be settled between each pair of participants. These bilateral funds movements are themselves netted 630 to form a set of "multilateral net" funds movements where each participant either net owes money to the other participants or is net owed money by the other participants.

These multilateral net movements are then passed to the pseudo settlement agent, which checks 640 that it will be possible to execute the net movements within the participants' available liquidity limits. If it is possible to execute these net movements, the conditions for settlement are in place and the transactions can clear. The liquidity limits maintained within the pseudo settlement agent are adjusted 650 accordingly and the batch clearing system is informed 660 that the pseudo settlement has succeeded. The batch clearing system can then inform 670 the participants of the payments that have been successfully cleared, in essentially the same manner as for the settlement before output model. The real-time clearing system interacts 680 with the central bank during central bank opening hours, as for standard real-time clearing.. As pseudo settlement has succeeded, there is no risk associated with this adjustment.

If one or more participants does not have sufficient liquidity to cover their net owed movements for the cycle, then the attempted settlement is reported as failed and no adjustments are made to the liquidity positions maintained in the pseudo settlement agent.

How the batch clearing system handles a failed settlement can vary according to local rules, but a typical response would be to remove from the cycle all payments to and from the participants that had insufficient liquidity, to recalculate the multilateral net movements between the remaining participants and to reattempt settlement according to the recalculated movements. Recalculating the multilateral net movements is easily achieved by removing the bilateral movements involving the failed participants. When an attempted pseudo settlement finally succeeds, only the individual payments between the participants remaining in the settlement are treated as settled and these are output to the participants as having been cleared.

Alternative implementations are possible. For example, one variation to the above approach would be to pass bilateral positions to the pseudo settlement agent and to perform the multilateral net calculations there rather than in the batch clearing system.

A composite system may be used combining direct central bank settlement and pseudo settlement by choosing one or the other for each batch settlement cycle. For example, direct settlement could be used during working days and pseudo settlement could be used overnight, on weekends and bank holidays. Such an approach could settle higher amounts for cycles during working days when participants can more easily move funds into their central bank accounts to cover the payments, but the smaller payments volumes expected on non-working days will be more easily covered by the liquidity positions maintained in the pseudo settlement agent.

The benefit of the approach taught in embodiments of the disclosure are that batch clearing can proceed when the central bank or equivalent settlement agent is closed for business, such as overnight, at weekends or on public holidays.

The accumulation of net positions over batch settlement cycles means that net funds movements between participating financial institutions are smoothed, thereby reducing the amount of liquidity required by each participant to allow successful clearing operations in each cycle.

Using this approach, the real-time and batch clearing systems can fully or partially "share" liquidity pools, reducing the overall requirements for participants to commit cash, collateral or other guarantees to facilitate clearing.

This approach also allows smaller financial institutions and other participant organisations to participate in continuously available batch clearing without having to participate directly in real-time clearing (with its associated costs).

Further modifications may be made to the above examples without departing from the scope of the present disclosure as defined in the accompanying claims.

## Claims

1. A method of providing batch payment clearing, the method comprising at a clearing system implemented by a suitably programmed computer system or network:
receiving a plurality of payments for clearing and settlement between account holders of participating financial institutions for clearing and settlement, wherein the plurality of payments are received during a settlement cycle;
at the end of the settlement cycle, calculating a net change in position for each participating financial institution;
using a pseudo settlement agent associated with a real time payment clearing service to determine whether the net changes in position for each participating financial institution meet the rules of the real-time payment clearing service; and
if the net changes in position for each participating financial institution meet the rules of the real-time payment clearing service, forwarding the plurality of payments to participating financial institutions as cleared and adjusting liquidity positions of the participating financial institutions held within the pseudo settlement agent or associated real-time payment clearing service to reflect the net funds movements.

2. The method of claim 1, wherein determining the net change in position for each participating financial institution comprises calculating net fund movements between the participating financial institutions to provide a net settlement position between the financial institutions, and for each participating financial institution summing the balances in the net settlement positions involving that financial institution.

3. The method of claim 1 or claim 2, wherein the rules of the real-time payment service comprise liquidity rules for participating financial institutions.

4. The method of any preceding claim, wherein the pseudo settlement agent is implemented by one or more elements of a real-time payment clearing service.

5. The method of any preceding claim, wherein if settlement using the pseudo settlement agent fails, a further attempt at settlement is made after removing one or more payments.

6. The method of claim 5, wherein if settlement fails, all payments involving participating financial institutions that failed a liquidity rule are removed from the plurality of payments, and the further attempt at settlement is made thereafter.

7. The method of any preceding claim, further comprising determining whether a central bank will be open when the transactions of a settlement cycle will be ready for settlement, and forwarding the transactions directly to the central bank for settlement if the central bank is open and using the pseudo settlement agent if the central bank is not open.

8. The method of any preceding claim, wherein adjusting liquidity positions of the financial institutions further comprises adjusting liquidity positions at a or the central bank.

9. A computer-implemented batch payment clearing system, the batch payment clearing system comprising a computer system or network having one or more processors programmed to:
receive a plurality of payments for clearing and settlement between account holders of participating financial institutions for clearing and settlement during a settlement cycle;
at the end of the settlement cycle, calculate a net change in position for each participating financial institution;
use a pseudo settlement agent associated with a real time payment clearing service to determine whether the net changes in position for each participating financial institution meet the rules of the real-time payment clearing service; and
if the net changes in position for each participating financial institution meet the rules of the real-time payment clearing service, forward the plurality of payments to participating financial institutions as cleared and make adjustments in respect of the plurality of payments to liquidity positions of the participating financial institutions held within the pseudo settlement agent or its associated real-time payments system.

10. The batch payment clearing system of claim 9, wherein in determining the net change in position for each participating financial institution the batch payment clearing system calculates net fund movements between the participating financial institutions to provide a net settlement position between the financial institutions, and for each participating financial institution sums the balances in the net settlement positions involving that financial institution.

11. The batch payment clearing system of claim 9 or claim 10, wherein the pseudo settlement agent is implemented by one or more elements of a real-time payment clearing service.

12. The batch payment clearing system of any of claims 9 to 11, wherein if settlement using the pseudo settlement agent fails, the batch payment clearing system is adapted to make a further attempt at settlement is made after removing one or more payments.

13. The batch payment clearing system of claim 12, wherein if settlement fails, the batch payment clearing system is adapted to remove all payments involving participating financial institutions that failed a liquidity rule from the plurality of payments, and to make the further attempt at settlement thereafter.

14. The batch payment clearing system of any of claims 9 to 13, further comprising the batch payment clearing system being adapted to determine whether the central bank will be open when the transactions of a settlement cycle will be ready for settlement, and forwarding the transactions directly to the central bank for settlement if the central bank is open and using the pseudo settlement agent if the central bank is not open.
